# EUROPEAN PATENT APPLICATION

(11) **EP 2 665 020 A2**
(43) Date of publication of application: **20.11.2013**
(21) Application number: 13165501.1
(22) Date of filing: 26.04.2013
(51) Int. Cl.: G06N 5/04

(54) **Incremental reasoning under data source availability constraints**

(30) Priority: 16.05.2012 US 201213473512
(71) Applicant: Telefonaktiebolaget LM Ericsson (Publ), 164 83 Stockholm (SE)
(72) Inventor: Xing, Bo, Freemont,, CA California 94555 (US); Hjelm, Johan, Tokyo 165-0025 (JP); Matsumura, Takeshi, Setagaya,, Tokyo 155-0031 (JP); Ton, Andrew, San Jose,, CA California 95136 (US)
(74) Representative: Rees, Simon John Lewis

(57) **Abstract**

A method executed by a computer system for generating a high level inferred conclusion from raw data collected from a plurality of data sources by application of an ontology reasoning system, the method comprising the steps of determining availability of intermediate results received from a plurality of shallow reasoners, the intermediate results generated by the plurality of shallow reasoners based on the plurality of data sources; propagating the intermediate results to nodes of an ontology graph; executing incremental ontology reasoning over the ontology graph to generate inferred conclusions; and persisting inferred conclusions in an ontology database.

## Description

### FIELD

The embodiments of the invention relate to a system for generating high-level inferred conclusions based on a plurality of raw data sources. Specifically, the embodiments of the invention relate to a reasoning system capable of producing the high-level inferred conclusions in circumstances of constrained data source availability.

### BACKGROUND

Decreasing costs for computing devices and computing components has lead to their widespread use in many products and environments. These environments with many computing devices are referred to as pervasive computing environments. With the rapid growth of pervasive computing environments, computer-based reasoning systems are increasingly being deployed to help manage these environments and distill useful information from them. These reasoning systems process a data set that is collected from a range of data sources within the pervasive computing environment, and the reasoning system infers high-level conclusions from this data set. The conclusions are made available and are used for further appropriate actions to be taken without human intervention. For example, a real-time reasoning system can process a stream of data that constantly is being received, and the reasoning system needs to draw and expose conclusions in the shortest time possible to keep up with the constant update of the data stream.

A variety of reasoning mechanisms and a variety of combinations of these reasoning mechanisms have been employed by reasoning systems including, Fuzzy logic, Bayesian logic, rules-based reasoning, case-based reasoning, and semantic reasoning. Some of these reasoning mechanisms consist roughly of a rule set and a means of applying this rule set to raw data. Some other reasoning mechanisms such as semantic reasoning use semantic web technologies, to pose a structured data format that contains restrictions on what it is possible to do with the input data.

The performance of a reasoning system varies significantly depending on many factors. One of them is that the reasoning mechanisms constituting the system have very different characteristics in terms of processing power and memory capacity, which also depends on the processor and other computing resources available. Another notable factor is the availability of data from the data sources. Inconsistent update frequencies from data sources or broken connectivity between the data sources and the reasoning system can be the cause of unavailability, intermittent availability or delayed availability of data for a reasoning system.

One example environment for reasoning systems is machine-to-machine environments. In machine-to-machine environments, a group of simple computing devices are able to communicate through a communication network. This results in data streams that are generated at many different machines as raw data streams. These data streams are brought together to make sense of these data streams so that appropriate actions can be promptly and automatically taken by other machines in the network.

### SUMMARY

A method executed by a computer system for generating a high level inferred conclusion from raw data collected from a plurality of data sources by application of an ontology reasoning system, the method comprising the steps of determining availability of intermediate results received from a plurality of shallow reasoners, the intermediate results generated by the plurality of shallow reasoners based on the plurality of data sources; propagating the intermediate results to nodes of an ontology graph; executing incremental ontology reasoning over the ontology graph to generate inferred conclusions; and persisting inferred conclusions in an ontology database.

A computer system for generating a high-level inferred conclusion from raw data collected from a plurality of data sources by application of an ontology reasoning system, the computer system comprising a reasoning system including a processing device to execute a reasoning planner and an ontology reasoner; an in-memory ontology store to store a plurality of ontology graph; and an ontology database to store inferred conclusions derived by the ontology reasoner, the reasoning planner to receive a plurality of intermediate results from a plurality of shallow reasoners, the intermediate results derived from the raw data, the reasoning planner to schedule processing of ontology graphs by the ontology reasoner and to propagate the plurality of intermediate results to a corresponding ontology graph, the ontology reasoner to generate inferred conclusions by application of logic defined by the ontology graph to the intermediate results.

### BRIEF DESCRIPTION OF THE DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to affect such feature, structure, or characteristic in connection with other embodiments whether or not explicitly described.

**Figure 1** is a diagram of one example of a pervasive computing environment in communication with a reasoning system.

**Figure 2** is a flowchart of one embodiment of the process of the reasoning system.

**Figure 3** is a diagram of one example of a decision network in a base ontology.

**Figure 4** is a diagram of another example decision network in a base ontology that defines the reasoning problem in a security system.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

The operations depicted in the flow diagrams in the attached Figures will be described with reference to the exemplary embodiments shown in the attached Figures. However, it should be understood that the operations depicted in the flow diagrams can be performed by embodiments of the invention other than those discussed with reference to the attached Figures, and the embodiments discussed with reference to the diagrams in the attached Figures can perform operations different than those discussed with reference to the flow diagrams of the attached Figures.

The techniques shown in the figures can be implemented using code and data stored and executed on one or more electronic devices (e.g., an end station, a network element, etc.). Such electronic devices store and communicate (internally and/or with other electronic devices over a network) code and data using non-transitory machine-readable or computer-readable media, such as non-transitory machine-readable or computer-readable storage media (e.g., magnetic disks; optical disks; random access memory; read only memory; flash memory devices; and phase-change memory) and transitory computer -readable transmission media (e.g., electrical, optical, acoustical or other form of propagated signals - such as carrier waves, infrared signals, digital signals).. In addition, such electronic devices typically include a set of one or more processors coupled to one or more other components, such as one or more storage devices, user input/output devices (e.g., a keyboard, a touch screen, and/or a display), and network connections. A 'set,' as used herein, refers to any positive whole number of items. The coupling of the set of processors and other components is typically through one or more busses and bridges (also termed as bus controllers). The storage devices represent one or more non-transitory machine-readable or computer-readable storage media and non-transitory machine-readable or computer-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware.

As used herein, a network element (e.g., a router, switch, bridge, etc.) is a piece of networking equipment, including hardware and software, that communicatively interconnects other equipment on the network (e.g., other network elements, end stations, etc.). Some network elements are "multiple services network elements" that provide support for multiple networking functions (e.g., routing, bridging, switching, Layer 2 aggregation, session border control, multicasting, and/or subscriber management), and/or provide support for multiple application services (e.g., data, voice, and video).

Data sources as used herein refer to any type of device capable of creating or collecting data and communicating data. The devices can include appliances, console devices, handheld devices, meters, scientific instruments and similar devices. The data sources can communicate over any number or type of standardized or non-standardized networks including wireless, near field communication, optical, wired or similar networks. The data sources can produce any amount of data at any frequency or rate. The data generated or collected by the data sources is typically basic in nature, such a temperature reading, an activation state, sensor input or similar. The data can be initially collected as either analog or digital information and transported over the network in either an analog or digital format.

The embodiments of the present invention provide a method and system for avoiding the disadvantages of the prior art. The disadvantages of the prior art are that previous reasoning systems and reasoning methods could not process large numbers of data sources in an on-going or real-time fashion, in particular when facing resource constraints. Processing these data sources was time and resource intensive and the time required to process the raw data from these data sources cause the derived information to be stale (i.e., old and not representative of current conditions in the computing environment) thereby diminishing the utility of the information being produced and limiting the types of higher level conclusions and actions that could be taken in reaction to this processing of the data sources.

The embodiments of the invention overcome these disadvantages of the prior art. The disadvantage of the prior art are avoided by using instanced ontology reasoning to incrementally reason over raw data that has first been processed by a set of shallow reasoners. The incremental reasoning can take into account constantly updating or real-time data sources as the shallow reasoners populate an instance of an ontology graph to which ontology reasoning is applied to infer intermediate results that are in turn further propagated across the instance of the ontology graph to obtain an increasingly finer granularity of inferred conclusions, these inferred conclusions provide high-level conclusions based on the application of reasoning logic to the instance of an ontology graph and the processing of the raw data by shallow reasoners.

The embodiments make it possible for a reasoning system to infer conclusions as accurately as possible depending on how much input data is available on an on-going basis. This improves the quality and timeliness or availability of the output from the reasoning system thereby expanding the options and actions that can be taken in light of this information. The embodiments achieve a balance between availability and timeliness of reasoning conclusions to better satisfying the needs of real-time queries from external systems or applications. The embodiments are generally applicable to a wide variety of computing environments such that it can be applied to various domains with different natures and needs for reasoning.

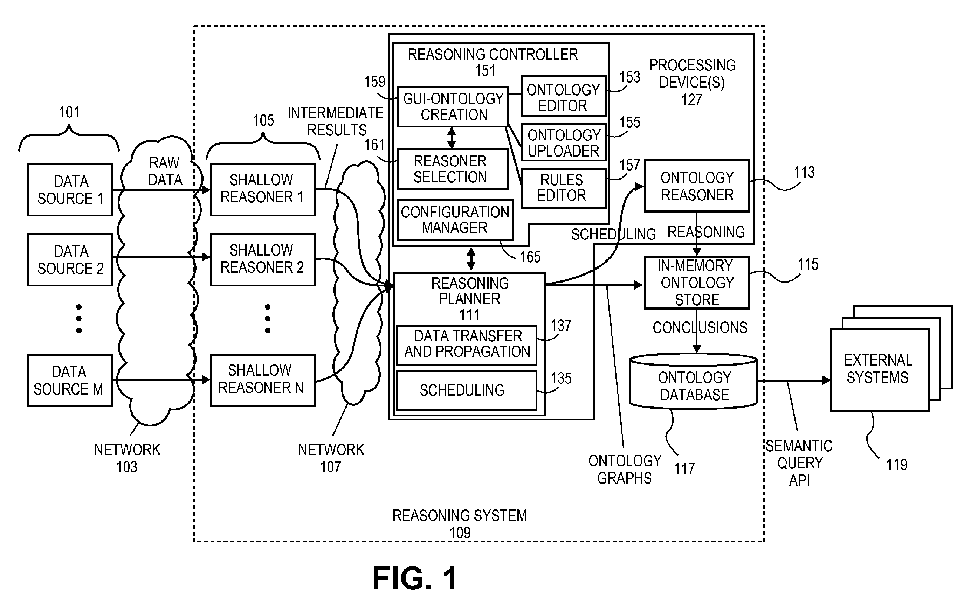

**Figure 1** is a diagram of one example of a pervasive computing environment in communication with a reasoning system. The pervasive computing environment or any networked set of data sources can provide a set of raw data streams to a set of shallow reasoners. The data sources can be any combination of computing devices that generate data such as handheld devices, sensor devices, appliances, network devices or similar devices with network communication capability and data collection or data generation capability. These shallow reasoners can be part of or separate from the reasoning system and the shallow reasoners perform an initial analysis of the raw data as it is received, where the intermediate results are provided to a reasoning planner where they are scheduled and propagated to an instance of an ontology graph to enable high-level inferred conclusions to be generated from the intermediate results.

The following terms are utilized herein, a base ontology, reasoning task and an ontology graph, amongst other. As used herein, a base ontology refers to an ontology file or in-memory data structure that defines (using a language such as web ontology language (OWL)) the concepts and the relations between those concepts (and in some embodiments, the rules for inferences on those concepts) in the reasoning problem concerned.

A reasoning task as used herein is a task that reasons over a particular set of data inputs to derive a high-level object in the ontology. An ontology graph, as used herein, is an in-memory data structure that represents a reasoning task by instantiating the inputs of the reasoning task as concepts and relations dictated by the base ontology.

Each of the components of the reasoning system and associated devices is discussed at greater length herein below.

### Data Sources 101

Data sources 101 are a set of devices where the input to the reasoning system 109 originates. These devices provide the raw data from which conclusions are to be drawn. In one embodiment, the data sources 101 are internal data sources (devices residing within the same network or system) or external data sources (devices residing within any number of separate networks or systems that are in communication with the reasoning system 109). The data sources 101 can communicate to the reasoning system 109 using any type of communication protocol or transport medium. The data sources 101 can communicate over any number of intermediate networks 103, 107 including local area networks (LANs), wide area networks (WANs), such as the Internet, or similar networks. Any number and variety of data sources 101 can be in communication with the reasoning system 109. Example sets of data sources 101 include utility meters spread throughout an area, such as city, state, country, continent, or similar distribution, that are in communication with a reasoning system 109 belonging to the utility company. Another example set of data sources can be a set of home appliances that are in communication with a home management system employing a reasoning system 109 that adjust appliance settings in reaction to information received from the data sources 101.

### Shallow Reasoners105

A shallow reasoner 105 is a pre-processing unit that reasons over the raw data from data sources 101 to derive intermediate results that will facilitate concluding the final objects in the ontology. A shallow reasoner 105 can implement a process that may employ relatively simple reasoning techniques such as fuzzy logic, Bayesian networks, and similar processes. Each shallow reasoner 105 can connect to one or multiple data sources 101, and can generate one or several intermediate results in response to receiving raw data from a data source 101, based on what its purpose is. For instance, a shallow reasoner 105 that connects to a data source 101 providing a user's global positioning system (GPS) traces can generate two intermediate results: (1) the user's average speed, and (2) the user's location or route. In another example, a shallow reasoner 105 takes multiple sensors in a room as data sources 101 and generates one intermediate result: whether someone is in the room.

Shallow reasoners 105 can be processes that are executed by general purpose hardware or dedicated hardware in any type of computing device. The shallow reasoners can be executed by processors that are embedded in the devices of the data sources 101, can be executed as part of the reasoning system 109, can be executed by separate specialized hardware or any combination thereof. Any number of separate shallow reasoners 105 can be executed as part of the data source devices, separate devices or the reasoning system. Each shallow reasoner 105 can process or receive data from any number or combination of data sources 101. Similarly, any given data source 101 can be paired with or transmit raw data to any number and combination of the shallow reasoners 105. The shallow reasoners 105 can be local to either the data sources or the reasoning system 109 or remote to both. The shallow reasoners 105 can communicate with the data sources 101 over a local bus or similar technology if local and over any number or combination of networks 103, 107.

### In-Memory Ontology Store 115

The in-memory ontology store 115 is storage device within the reasoning system 109 where part of the ontology reasoning process takes place. As intermediate results from shallow reasoners 105 become available, they are converted to corresponding representations in base ontologies, i.e., ontology graphs instances, by the reasoning planner 111 and are loaded into the in-memory ontology store 115 where the ontology graph and its data representing the intermediate results that have been received from the shallow reasoners 105 are stored. The in-memory ontology store 115 is transient in the sense that ontology graphs as well as inferred conclusions are removed from it (but will be persisted in the ontology database 117) when certain conditions are met. The in-memory ontology store 115 can be any type of data storage device including dynamic memory, solid-state memory, magnetic, optical or similar storage mediums. The in-memory ontology store 115 can have any size and can store any number of ontology graphs. The in-memory ontology store 115 can be a logical entity that has a physically distributed or device specific operation. For example, it is possible to store any number of ontology graphs on separate machines as they each concern independent reasoning tasks.

### Reasoning Planner 111

The reasoning planner 111 is the component that keeps track of what ontology graphs are loaded in the in-memory ontology store 115, and schedules the execution of the ontology reasoner 113 as well as the removal of obsolete ontology graph instances from the in-memory ontology store 115. This component is a logical entity, meaning that physically it can work in a distributed manner on multiple communicating machines, given the workload it has in real time. In one embodiment, the reasoning planner 111 is executed partially or primarily on a set of processors 127 in the reasoning system that are in communication with the shallow reasoners 105. The shallow reasoners 105 can be local or remote from the reasoning planner 111. Remote shallow reasoners 105 can communicate with the reasoning planner 111 over a network 107 that can be a LAN, WAN or similar network. The reasoning planner 111 receives the intermediate results from the shallow reasoners 105 and provides these intermediate results to the in-memory ontology store 115 where they are stored within the appropriate node or set of nodes of the ontology graph instances stored therein this data transfer and propagation function can be performed by a data transfer and propagation module 137 or similar component of the reasoning planner. The reasoning planner 111 also schedules (via e.g., a scheduling module 135) the ontology reasoner 113 to execute over the ontology graph instances and then to process the ontology graph instance with the updated intermediate results to generate new inferred conclusions that are in turn utilized to further fill in the ontology graph instance to generate higher level conclusions.

### Ontology Reasoner 113

The ontology reasoner 113 is the component that reasons over the ontology graphs loaded in the in-memory ontology store 115, and infers conclusions through incremental consistency checking, classification and realization. The ontology reasoner 113 could be a component implementing reasoning process similar to what is implemented in Pellet, HermiT, and Fact++. The ontology reasoner 113 can also implement other ontology-based reasoning processes to infer conclusions based on data populating the ontology graphs that originates from intermediate results of the shallow reasoners and previous inferred conclusions of the ontology reasoner 113. The ontology reasoner113 can be executed by a set of processors 127 in localized or distributed manner. The ontology reasoner 113 can be scheduled by the reasoning planner 111 and operate over an instance of an ontology graph identified by the reasoning planner 111, such as an instance of an ontology graph having recently received updated data.

### Ontology Database 117

The ontology database 117 is where the final conclusions are persisted and potentially exposed to the outside world. The conclusions generated by the reasoning system 109 are persisted in the form of ontologies along with the pre-defined base ontology. They can be retrieved by third-parties through either semantic queries (based on the base ontology) or non-semantic queries (e.g., by specifying parameters in an HTTP REST API call or similar process). The ontology database 117 is ideally a graph database system, but can also be any other type of database system including relational database system, key-value database, object oriented database or similar database system such as a database system that implements supports for graph operations. The database system can be local to or remote from the other components of the reasoning system. The ontology database 117 can be accessed by any number of separate or external systems 119 through an application programming interface (API) or similar interface system. Any number of external systems can access this information containing the inferred conclusions of the ontology graphs that are persisted in the ontology database 117.

### Reasoning Controller 151

In one embodiment, the reasoning system 109 includes a reasoning controller 151 that facilitates the management of base ontology input and selection as well as ontology reasoner selection. The reasoning controller 151 can include an ontology reasoner selection module 161, an ontology editor 153, ontology uploader 155, a rules editor 157 and an ontology creation graphical user interface module (GUI). These components work together to provide a software environment where a user can input base ontologies into the reasoning system 109 or can define the base ontologies from scratch. The reasoning controller 151 also provides an interface. The reasoning controller 151 also serves to work with the reasoning planner to identify ontology reasoners that fit the execution parameters and resources of the reasoning system 109 as configured by the operator of the reasoning system 109. The reasoning controller 151 provides the user interface to the reasoning system 109 and can also include an authentication and/or authorization system to control which users have access to the resources and configuration of the reasoning system 109.

The ontology editor 153 provides a set of tools for creating a new base ontology or modifying an existing base ontology. Similarly, rules sets can be created or modified through the rules editor 157. The ontology editor 153 and rules editor 157 can provide a set of graphical user interfaces for defining ontologies and rules, these user interfaces can include menus and displays of existing rules and ontologies and user interfaces for inter-connecting or relating these pre-existing building blocks. The ontology editor 153 and rules editor 157 also include text based language input interfaces for programmatically defining rules and ontologies using any type of language or logic system. The ontology editor 153 and rules editor 157 can include verification functions to ensure that the syntax and semantics of the created ontologies and rules are correct and issues error messages and advice for correction.

Separately, created or pre-existing base ontologies or rules sets can be uploaded through the ontology uploader 155. A user can identify ontologies or rules sets with file names, uniform resource identifiers or similar data location identification information. The uploader 155 imports the data and may reformat the data to the format of the reasoning system. The uploader 155 can also invoke the verification functions of the ontology editor 153 and rules editor 157 to check the syntax and semantics of the uploaded ontologies or rules sets. The uploaded rules set or ontology can then be made available to the user for further modification or configuration through the ontology editor 153, rules editor 157 and ontology creation GUI 159.

The ontology creation GUI 159 provides the user interface for accessing the tools of the reasoning controller 151. The ontology creation GUI 159 can provide any combination of menus, windows, graphic representations of ontologies and rules, and similar user interface elements to enable a user with minimal knowledge of ontology and rules creation to set up and deploy the base ontologies and rules necessary to draw the high level conclusions desired from the available set of data sources. The ontology creation GUI 159 provides the user interface for each of the other components of the reasoning controller 151. In a further embodiment, a remote client can be used to access and interface with the reasoning controller 151. The remote client can access the functions and features of the reasoning controller 151 using a remote GUI provided by the ontology creation GUI.

A configuration manager 165 can provide the tools necessary for configuring the inter-operation of the ontologies and rules that create an ontological tool for determining high level conclusions from available data sources. A user can link base ontologies, shallow reasoners, ontology reasoners and rules sets through a graphical view to create and deploy an ontological tool for solving and defining a reasoning task. The configurations of these ontological tools can be stored in a separate configuration database or similarly stored within the reasoning system 109. In one example embodiment, the set of base ontologies, ontology reasoners, and rules sets are stored together as executive file (e.g., a .jar file).

Configuration can include defining a set of operating requirements or parameters that can affect the selection of the ontology reasoner to execute for a reasoning task. Configuration options for requirements related to a reasoning task can include latency, memory usage, processor usage and similar requirements. These requirements can guide the selection of types of ontologies to create or use. The configuration manager can use input requirements and information about the performance of different ontology types to suggest ontology reasoners to utilize for a given ontology or reasoning task. In a best case scenario the configuration manager is able to suggest an ontology reasoner for a reasoning task based on the input ontology type. Even if an ontology type is not specified with a particular ontology reasoner, the parameters such as latency, memory usage, processor usage and similar parameters can influence the ontology reasoner selection or suggestion.

### The Process

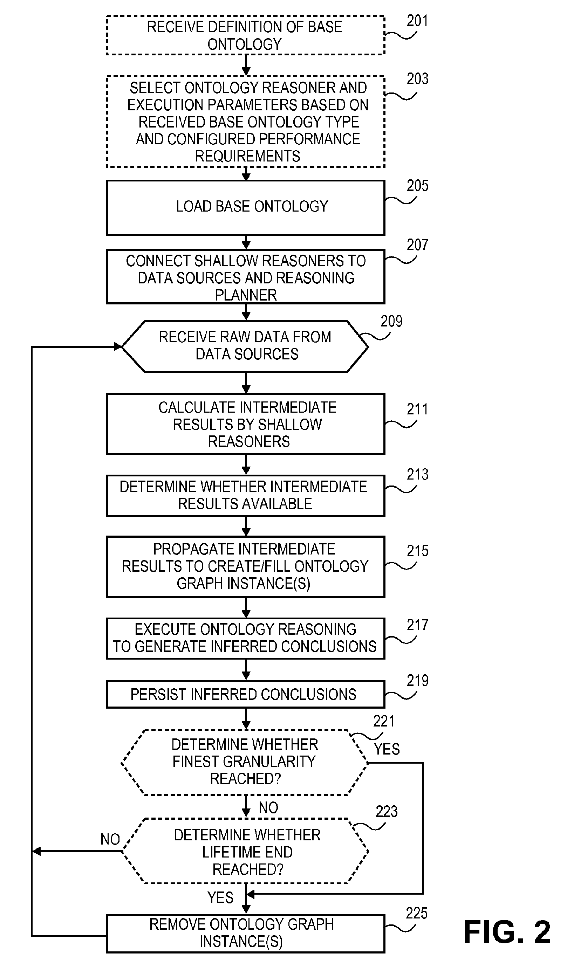

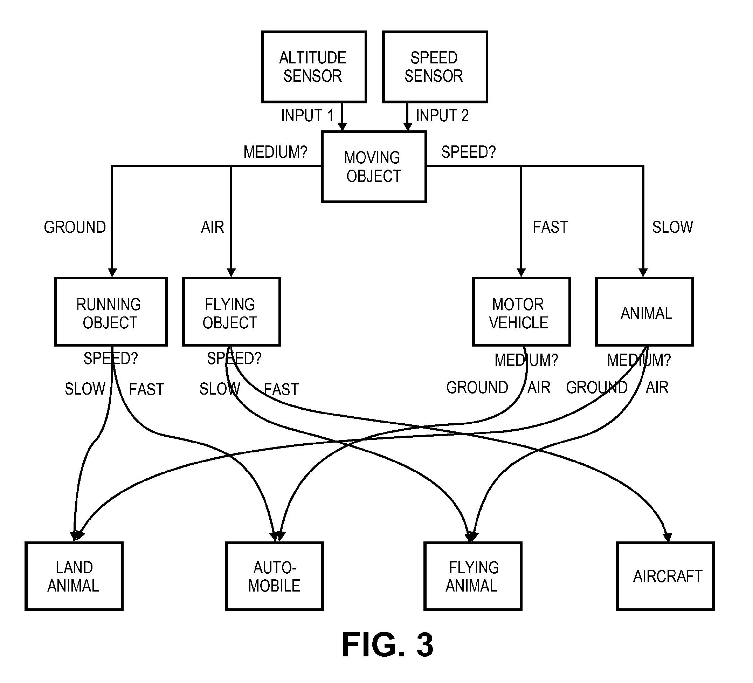

**Figure 2** is a flowchart of one embodiment of the process of the reasoning system. For sake of clarity an example application of the process is described in conjunction with the process. This example is provided by way of illustration and not limitation. One skilled in the art would understand that the process can be applied to other scenarios. In this example, the reasoning system attempts to infer the type of a moving object that is detected. The example base ontology corresponding to this is illustrated in **Figure 3****.** In the illustrative example, the inputs to the reasoning system come from two data sources: (1) an altitude sensor, which detects the altitude of the moving object (used to derive the medium in which it is moving -- in the air, or on the ground); and (2) a speed sensor, which detects the speed of the moving object (used to derive its mobility -- fast, or slow). Due to the different natures of the two sensors plus other factors, the data they generate capturing the same moving object at the same time may be available to the reasoning system at different times. However, receivers or users of the conclusions from the reasoning system may require receiving reasoning conclusions within a short period of time for immediate reactions to be taken, for example, a surveillance system that responds to an unauthorized moving object.

### Receive Definition of Base Ontologies (Block 201)

A base ontology describes in a formal way the concepts in the problem domain of a reasoning task and the relationships between the concepts. To achieve the balance between reasoning timeliness and conclusion availability, a base ontology is defined in the form of an ontology graph that can function as a decision network. The root of the network is the known category that all possible objects in the ontology belong to. All other nodes in the decision network represent objects which the reasoning system can arrive at. Every node represents an object which refines the properties inherited from its parent node. Each node can have multiple parent nodes, such that the ontology graph does not need to represent strict inheritances through the levels of a 'tree', but rather a network. This modification is to allow a wider array of relationships amongst the nodes of the ontology graph. It provides support for the inclusion of objects that are derived from the data retrieved from any number of data sources. Various data sources can, in this view, be represented as hierarchies of objects, where the depth of a node in the hierarchy implies the granularity of the corresponding conclusion - the deeper a node is, the finer-grained the conclusion is. The schema for the network is formally represented as a rule (or Equivalent Class property) in the base ontology.

In the example, the "Moving Object" base ontology, in which the decision network is depicted in Figure 3. The root of the hierarchy is "Moving Object," which is the concept (i.e., root) that all possible objects belong to, and is itself an object with the coarsest granularity in the hierarchy. Its child nodes "Running Object" and "Flying object" represent finer-grained objects refined with "Medium" derived from data from the Altitude Sensor. Similarly, "Motor Vehicle" and "Animal" are further finer-grained objects refined with "Mobility" derived from data from the Speed Sensor (i.e. inheriting the properties which define them from the Running Object node, refined by the data from the Speed Sensor). Deeper within the network tree structure are the finest-grained objects, refined with derived data from the other sensors.

Such a base ontology including its decision network can be defined by a user through the use of the ontology creation GUI 159, or can be learned by a machine learning system. As an implementation example, such a base ontology, during actual reasoning processes, can be instantiated as ontology graphs populated with intermediate results inferred by shallow reasoners from raw data inputs.

### Select Ontology Reasoner (Block 203)

After a base ontology has been received or derived, an ontology reasoner is selected with the appropriate execution parameters to be applied to an instance of the base ontology. The ontology reasoner can be selected based on any combination or weighting of the reasoning execution parameters (e.g., latency, memory usage, processor usage and similar parameters) or based on the type of the ontology and its characteristics. The user can specify performance requirements that must be met or that are ideal for the reasoning problem. The ontology reasoner to be applied can also be specifically configured by a user. The configuration manager and reasoning planner coordinate to select and schedule the operation of the ontology reasoner for a particular reasoning problem.

### Load the Base Ontology (Block 205)

After the base ontology has been received or derived and verified, and the ontology reasoner has been configured or selected, the reasoning system can be brought up and running. It may already be in operation, in which case the received base ontology is directly generated and loaded into the in-memory ontology store to govern the instantiation of ontology graphs that will be populated with data from the shallow reasoners and inferred intermediate conclusions. Any number of instances of any number or combination of base ontologies can be created and managed by the reasoning system for separate or overlapping use of data sources. When in use, an ontology graph instance is created in the in-memory ontology store based on the base ontology, and is populated with the incoming intermediate results from shallow reasoners, inferred conclusions from the ontology reasoned and similar data.

### Connect Shallow Reasoners to Data Sources and Reasoning Planner (Block 207)

When the reasoning system starts executing, shallow reasoners are connected to data sources and the reasoning planner. At the input end, a shallow reasoner is connected to its corresponding data sources (e.g., through HTTP connections or similar communication protocol) for receiving raw data. At the output end, a shallow reasoner is connected to the reasoning planner, specifying to which base ontologies its output results are relevant. This connection between the shallow reasoners and the reasoning planner can also utilize an http connection or similar communication protocol.

As raw data becomes available at data sources (Block 209), a shallow reasoner processes it and transforms it into intermediate results that can be represented as concepts in the relevant base ontologies (Block 211). The shallow reasoner then sends the generated intermediate results (with an ID identifying the ontology graph instance to which it is tied) to the reasoning planner.

In the example, there are two shallow reasoners respectively dealing with the two data sources. The first shallow reasoner connects to the altitude sensor and derives whether the moving object moves in the air or on the ground based on its altitude. The second shallow reasoner connects to the speed sensor, and derives whether the object moves fast or slow based on its maximum speed. Both shallow reasoners at the output end are connected to the "Moving Object" base ontology at the reasoning planner. Intermediate results like "Ground" or "Air" and "Fast" or "Slow" are sent to the reasoning planner once they become available.

### Create/Fill Ontology Graphs

The reasoning planner continuously communicates with the shallow reasoners to determine when intermediate results are available (Block 213) and upon receiving an intermediate result from a shallow reasoner, the reasoning planner picks the relevant base ontologies (i.e., the ontology graph instance with the corresponding ID), and loads an instance of the base ontology into the in-memory ontology store if they are not in there yet. The intermediate result is then represented as part of ontology graph instance of the relevant base ontologies (as individuals of the classes) (Block 215).

An ontology graph is a graph in the in-memory ontology store that consists of ontology individuals concerning the same reasoning task, and will lead to a conclusion to be drawn. An ontology graph has a unique ID that differentiates the reasoning task from others (e.g., the ID could be a combination of the ID of the instance and the ID of the base ontology). The reasoning planner keeps track of the IDs of all ontology graphs in the in-memory ontology store.

Before loading the intermediate result into the in-memory ontology store, the reasoning planner checks whether corresponding ontology graphs have already been created (e.g., using the reasoning task ID). If not, a new ontology graph is created for each of the relevant base ontologies, by instantiating an individual of the root node of the object hierarchy of the decision network. In any case, the intermediate result is filled in the ontology graphs based on its relationships with other individuals (as defined in the base ontologies).

Returning to the example, which is tracking a moving object. The object is uniquely identified by a timestamp (the time it was first detected), which is also the ID of the ontology graph to be created. Assume that an intermediate result "Ground" (with the ID) first comes in from the shallow reasoned processing the data from the altitude sensor. The reasoning planner checks for the ID and determines that no ontology graph with that ID exists, so it creates an ontology graph in the in-memory ontology store by instantiating an individual of the "Moving Object" class. Moreover, it fills in the graph with other individual and relationships indicating that the "Moving Object" individual has a "Medium" property of "Ground." In one embodiment, a timer is set up and associated with the ontology graph.

### Executing Ontology Reasoning (Block 217)

At the time when an intermediate result is loaded into the in-memory ontology store, the reasoning planner checks whether an execution of the ontology reasoner has been scheduled. If not, it schedules it to execute. In one embodiment, execution may be scheduled after a delay. The delay can have any duration as configured by the user or as determined based on the frequency of received data from the configured shallow reasoners. With this delay, other intermediate results that arrive a little later (before the end of the delay) will not trigger an extra execution of the ontology reasoner, thus reducing computational overhead. The value of the delay is configurable either offline or dynamically, based on the needs of the reasoning system. If timeliness of conclusions is of paramount importance, then the delay should be tuned to minimal. In the case of a zero delay, the ontology reasoner starts executing as soon as an intermediate result is loaded.

When executing, the ontology reasoner reasons over the in-memory ontology Store (including the base ontologies as well as all ontology graphs that have been created). The ontology reasoner utilizes mechanisms including consistency checking, classification and realization. For each ontology graph, the ontology reasoned attempts to derive and populate the deepest child node in the object hierarchy of the decision network that can be reached based on the availability of the requisite data in the parent node. Each reasoned or inferred conclusion can be persisted in the ontology database as it is generated (Block 219).

As additional intermediate results become available, more executions of the ontology reasoner are performed. All these executions use incremental ontology reasoning mechanisms (e.g., those available in semantic reasoners such as Pellet). This means that if a graph has been reasoned over before (and hence an inferred ontology exists in the in-memory ontology store), reasoning does not start from scratch, but rather works upon results from previous executions, and its results are further fed back into the ontology graphs, thus saving time and computation resources. At each step of the incremental process, the ontology reasoner can check whether a finest level of granularity has been reached (Block 221) or whether the end of the timer (i.e., a lifetime timer for the ontology graph) has been reached (Block 223). If either of these events occurs then the incremental ontology reasoning can be ended

Returning to the example of **Figure 3****,** when the ontology graph is created, assuming that the ontology reasoner has not been scheduled, the reasoning planner schedules it to execute 500 milliseconds later. Assume that no intermediate result comes in from the Mobility shallow reasoner during this period of time. When the ontology reasoner runs, it infers that the "Moving Object" individual is also a "Running Object." At a later point when an intermediate result "Slow" arrives from the Mobility shallow reasoner, another round of ontology reasoning incrementally infers that the "Moving Object" individual is a "Land Animal."

### Make Conclusions Available with Increasingly Finer Granularity

After an execution of the ontology Reasoner, all ontology graphs (with inferred conclusions) are immediately persisted in the ontology database. Thus, for each reasoning task, the currently best available conclusion (the deepest non-root node in the object hierarchy of the decision network that has been arrived at) is made available for external systems to query and access right away. As additional raw data comes from data sources over time, new intermediate results are fed into the in-memory ontology store, and further rounds of ontology reasoning take place. The conclusions exposed at the ontology database keep being updated with increasingly finer granularity.

Continuing with example, when a conclusion "Running Object" was made after the first round of ontology reasoning, the inferred ontology is immediately persisted in the ontology database. If a receiver or external system seeking high level information from the reasoning system queries the database at this point, it will receive a real-time conclusion that the moving object is a running object. At a later point that is after the second round of ontology reasoning, a receiver or external system if querying the database will receive the finest-grained conclusion that the moving object is a land animal.

### Remove Ontology Graph Instances

An ontology graph instance is removed from the in-memory ontology store (Block 221) as soon as a finest-grained possible conclusion (represented as a leaf node in the object hierarchy of the decision network) has been drawn and persisted. Otherwise, the ontology graph is removed from the in-memory ontology store if it has been there for a sufficiently long time (a timeout value). This is to minimize the size of the in-memory ontology store, so that ontology reasoning processes are efficient. Also, as an ontology graph beyond its lifetime loses its timeliness, conclusions drawn from it lose their usefulness. The timeout value can be configured based on the requirements and optimization goals of a reasoning system.

Continuing the example, as a leaf node in the object hierarchy of the decision network (i.e., "Land Animal") has been arrived at, the ontology graph in question is removed from the in-memory ontology store right after it is persisted in the database.

### Dynamically Injecting/Updating Base Ontologies and Shallow Reasoners

New or updated base ontologies can be injected into a reasoning system even when it is up and running. This is useful when new reasoning features are needed or when existing reasoning features need to be revised based on what has been learned (either by human beings or by machines). What it takes is, for example, uploading an ontology file and indicating whether it is new or what is the ID of an existing ontology it should replace. In the meantime, the reasoning system can expose an API for dynamically reconfiguring the linking between shallow reasoners and data sources as well as between shallow reasoners and the base ontologies. At any point, it can be changed where inputs come from and where outputs go to for an existing shallow reasoner.

Further, if needed, a new shallow reasoner can be injected on the fly as well, as a shallow reasoner can run independently from other components. In one embodiment, the system supports the deployment of the shallow reasoner and connects it to base ontologies at the reasoning planner through for example using an HTTP based API.

### Customizing Rules

In a further embodiment, it is possible to introduce customized rules which would prevent the finest-grained conclusions to be drawn in certain scenarios if needed (e.g., for privacy considerations). This could be achieved by (1) defining variants of a base ontology with shallower object hierarchies in their decision networks and dynamically loading the proper version of the base ontology based on the rules; or (2) removing an ontology graph from the in-memory ontology store (and thus stopping further reasoning) right after a conclusion of proper level of granularity has been reached based on the rules.

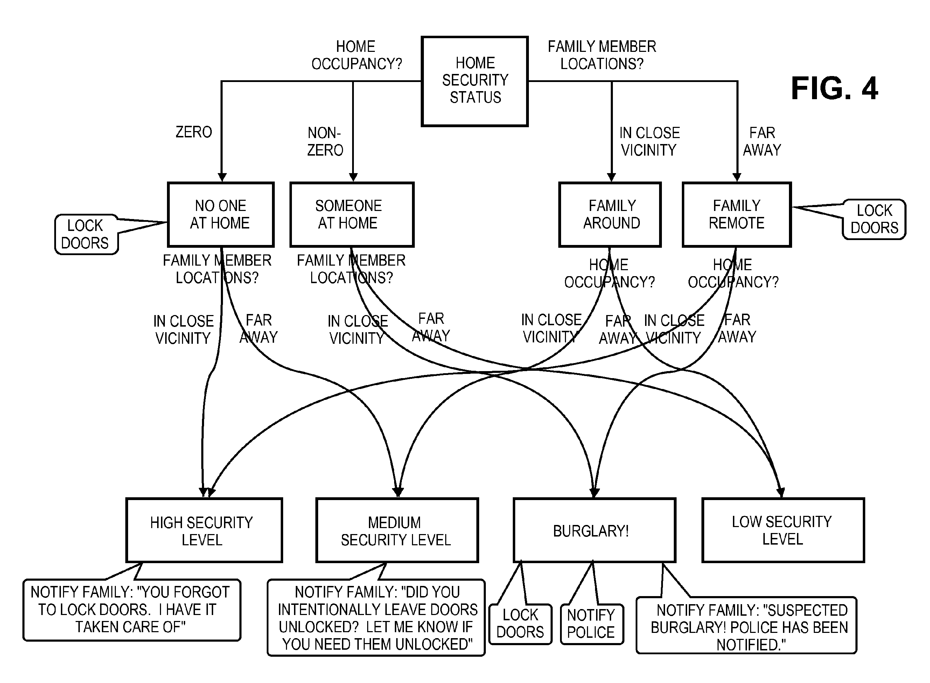

**Figure 4** is a diagram of one example ontology applied to a security system. In the illustrated example there is a home automation/security system that takes actions by itself based on the status of a home derived from a variety of data sources. The data sources include but are not limited to infrared detector, thermostat, home appliances, and similar data sources, as well as sensors of the mobile devices (e.g., smart phones) of the family members or similar users. The actions that the system could take are, for instance, to lock all doors (from inside and/or outside), call police, notify family members via their mobile devices, and adjust settings for dealing with a different home security levels.

In this example for sake of clarity the system has 2 shallow reasoners: (1) Home Occupancy shallow reasoned, which derives whether anyone is at home based on data from infrared detector, thermostat and home appliances; (2) Family Mobility shallow reasoned, which derives whether all family members are far away from home, or some are in close vicinity. Based on the intermediate results from these two shallow reasoners, conclusions on Home Security Status are drawn, and corresponding actions are immediately taken. The "deep" reasoning process uses a base ontology defined with a decision network illustrated in the following figure.

For purposes of illustration, assume that the system detects that one or more doors of the home are not locked, and needs to determine the status of the home and take actions. Once the intermediate result from the Family Mobility shallow Reasoner is available, and the reasoning system determines that the family is remote, the system immediately locks all doors (from both inside and outside). If, after a while, an intermediate result from the Home Occupancy shallow reasoner indicates that someone is at the home, the system infers that it is a burglary. It then calls the police, and sends a notification to family members (The burglar has already been locked inside the home). In another case, if intermediate result first comes from the Home Occupancy shallow reasoned indicating no one is at home, the system locks the door immediately. And later when it finds out that family is around or remote, it sends different notifications to the family, and sets different security levels in its setting (e.g., adjusting the sampling rate on sensors for reserving battery without compromising security).

It is to be understood that the above description is intended to be illustrative and not restrictive. Many other embodiments will be apparent to those of skill in the art upon reading and understanding the above description. The scope of the invention should, therefore, be determined with reference to the appended claims, along with the full scope of equivalents to which such claims are entitled.

## Claims

1. A method executed by a computer system for generating a high level inferred conclusion from raw data collected from a plurality of data sources by application of an ontology reasoning system, the method comprising the steps of:
determining availability of intermediate results received from a plurality of shallow reasoners, the intermediate results generated by a plurality of shallow reasoners based on the plurality of data sources;
propagating the intermediate results to an instance of an ontology graph;
executing incremental ontology reasoning over the instance of the ontology graph to generate inferred conclusions; and
persisting the inferred conclusions in an ontology database.

2. The method of claim 1, further comprising the steps of:
receiving raw data from at least one data source;
calculating an intermediate result from the raw data; and
providing the intermediate result to a reasoning planner to propagate to of the instance of the ontology graph.

3. The method of claim 1, further comprising the step of receiving a definition of a base ontology.

4. The method of claim 1, further comprising the steps of:
checking whether a finest granularity has been reached in the incremental ontology reasoning; and
ending the incremental ontology reasoning in response to reaching the finest granularity.

5. The method of claim 1, further comprising the steps of:
checking whether a lifetime end for the incremental ontology reasoning is reached; and
ending the incremental ontology reasoning in response to the lifetime end being reached.

6. The method of claim 3, further comprising the step of:
instantiating the instance of the ontology graph as an instance of the base ontology.

7. The method of claim 6, further comprising the step of:
propagating the inferred conclusions to the nodes of the instance of the ontology graph.

8. The method of claim 6, further comprising:
removing the instance of the ontology graph from the ontology database in response to reaching an end of lifetime or a finest granularity in the incremental ontology reasoning.

9. The method of claim 1, further comprising:
selecting an ontology reasoner based on a type of the received base ontology.

10. The method of claim 1, further comprising:
servicing a request from an external system for the inferred conclusions.

11. A computer system implementing a reasoning system for generating a high-level inferred conclusion from raw data collected from a plurality of data sources by application of an ontology reasoning system, the computer system comprising:
a processing device to execute a reasoning planner and an ontology reasoner;
an in-memory ontology store to store a plurality of ontology graph instances; and
an ontology database to store inferred conclusions derived by the ontology reasoner,
the reasoning planner to receive a plurality of intermediate results from a plurality of shallow reasoners, the intermediate results derived from the raw data, the reasoning planner to schedule processing of the plurality of ontology graph instances by the ontology reasoner and to propagate the plurality of intermediate results to a corresponding ontology graph instance,
the ontology reasoner to generate inferred conclusions by application of logic defined by the plurality of ontology graph instances from the intermediate results.

12. The computer system of claim 10, further comprising:
the plurality of shallow reasoners to receive the raw data from the plurality of data sources.

13. The computer system of claim 10, wherein the reasoning planner is configured to receive a definition of a base ontology.

14. The computer system of claim 10, wherein the reasoning planner checks whether a finest granularity level is reached by the ontology reasoner.

15. The computer system of claim 10, wherein the reasoning planner checks whether a lifetime end for incremental ontology reasoning is reached.

16. The computer system of claim 10, wherein the reasoning planner instantiates an ontology graph instance as instance of the base ontology.

17. The computer system of claim 10, wherein the ontology reasoner propagates inferred conclusions to the corresponding ontology graph instance.

18. The computer system of claim 13, wherein the reasoning planner removes the ontology graph instance in response to reaching an end of lifetime or finest granularity in the incremental ontology reasoning.

19. The computer system of claim 10, further comprising:
a database manager to service a request from an external system for the inferred conclusions.

20. The computer system of claim 10, further comprising:
a reasoning controller to select an ontology reasoner based on a type of the received base ontology.
